Europäisches Patentamt

European Patent Office

Office européen des brevets

(19)

(11) Veröffentlichungsnummer: **0 184 601**
**A1**

(12) **EUROPÄISCHE PATENTANMELDUNG**

(21) Anmeldenummer: **84810611.8**

(22) Anmeldetag: **12.12.84**

(51) Int. Cl.⁴: **F 16 K 31/06, H 01 F 7/16**

(43) Veröffentlichungstag der Anmeldung: **18.06.86**
**Patentblatt 86/25**

(71) Anmelder: **GEBRÜDER SULZER
AKTIENGESELLSCHAFT**, Zürcherstrasse 9,
**CH-8401 Winterthur (CH)**

(84) Benannte Vertragsstaaten: **AT BE CH DE FR GB IT LI LU
NL SE**

(72) Erfinder: **Schepers, Petrus Martinus Maria,
Molenweg 20, NL-5741 NC Beek en Donk (NL)**

(54) **Magnetventil insbesondere für die Speisung von Elementen, z.B. Düsen einer Luftwebmaschine.**

(57) Bei dem Magnetventil sind die Teile (29, 16) zur Huberstellung für den Anker (6) an dem dem Ventil-Schließkörper (11) abgekehrten Ende (72) der Ankerstange (8) angeordnet. Dadurch läßt sich erzielen, daß das Federelement (18) besonders nahe an dem Ventil-Schließkörper (11) angreifen kann, wodurch die Bewegung des Ankers (16) besonders exakt entsprechend der Achse (35) verläuft. Hierdurch wiederum läßt sich erreichen, daß berührungslose, abnutzungsfreie Führung des Ankers (6) unter Spiel (7, 20, 10) angewendet werden kann.

EP 0 184 601 A1

KSR/Pat/T.669/WlNH/

Gebrüder Sulzer Aktiengesellschaft, CH-8401 Winterthur

Magnetventil insbesondere für die Speisung von Elementen,
z.B. Düsen einer Luftwebmaschine

Die Erfindung betrifft ein Magnetventil, insbesondere für die Speisung von Elementen, z.B. Düsen einer Luftwebmaschine, mit einem eine elektrische Spule enthaltenden Spulenkörper und einem darin hin und her beweglichen Anker, an dessen einem Ende ein mit einem Ventilsitz zusammenarbeitender Ventil-Schliesskörper angebracht ist.

Bei einem bisherigen Magnetventil dieser Art (DE-OS 31 32 396) besitzt der Anker zwischen dem am einen Ende befindlichen Ventil-Schliesskörper und dem im Spulenkörper geführten Teil einen in den Schlitz eines Dämpfungskörpers ragenden Flansch, durch den die Hubbewegung des Ankers begrenzt wird. Dadurch ist der Abstand des Ventil-Schliesskörpers von dem geführten Ankerabschnitt verhältnismässig gross. Für eine exakte Führung von Ventil-Schliesskörper und Anker ist daher bei diesem bekannten Magnetventil eine Gleitführung des Ankers im Spulenkörper vorgesehen. Hierdurch wiederum entsteht während des Betriebes am Spulenkörper und Anker laufend Abnützung, wodurch die Teile insbesondere bei hoher Schaltzahl und häufigem Schliessen und Oeffnen des Ventils ungenau arbeiten und schliesslich ersetzt werden müssen.

0184601

Der Erfindung liegt die Aufgabe zugrunde, ein besonders in dieser Hinsicht verbessertes Magnetventil zu schaffen. Die Erfindung geht von der Erkenntnis aus, dass der Anker berührungslos im Spulenkörper hin und her bewegbar sein soll, wobei der Abstand zwischen Ventil-Schliesskörper und dem im Spulenkörper hin und her beweglichen Ankerabschnitt zwecks exakter Arbeitsweise gering sein soll. Aus diesem Grund sollen die Teile für die Hubbegrenzung des Ankers in den Bereich des dem Ventil-Schliesskörper abgekehrten Ankerende verlegt werden.

Dementsprechend steht die Erfindung darin, dass an dem dem Ventilschlisskörper abgekehrten Anker-Ende ein den Ankerhub begrenzender Anschlag angeordnet ist und dass der Anker durch radial zwischen ihm und dem Spulenkörper wirkende Federelemente berührungslos im Spulenkörper gehalten ist, wovon eines unmittelbar beim Ventil-Schliesskörper angreift.

Auf diese Weise lässt sich der Forderung Rechnung tragen, dass Ventil-Schliesskörper und der im Spulenkörper geführte Ankerabschnitt trotz berührungsloser Halterung genügend exakt, d.h. immer in gleicher Achsstellung hin und her bewegt werden, obwohl eine berührungslose Halterung des Ankers angewendet wird. Der Abstand zwischen Ventil-Schliesskörper und im Spulenkörper geführten Ankerabschnitt ist besonders gering.

Weitere Merkmale ergeben sich aus der folgenden Beschreibung von Ausführungsbeispielen in Verbindung mit der Zeichnung und den Ansprüchen.

Fig. 1 zeigt einen Schnitt durch ein erfindungsgemäss ausgebildetes Magnetventil,

Fig. 2 veranschaulicht ein zugehöriges Detail und

Fig. 3 zeigt die Anwendung des Ventiles bei einer Luftwebmaschine, die schematisch von der Warenseite her dargestellt ist.

In einem Ventilgehäuse 1 ist ein eine elektrische Spule 2 enthaltender Spulenkörper 3 untergebracht. Die elektrischen Zuführungsleitungen für die Spule 2 sind mit 4 bezeichnet.

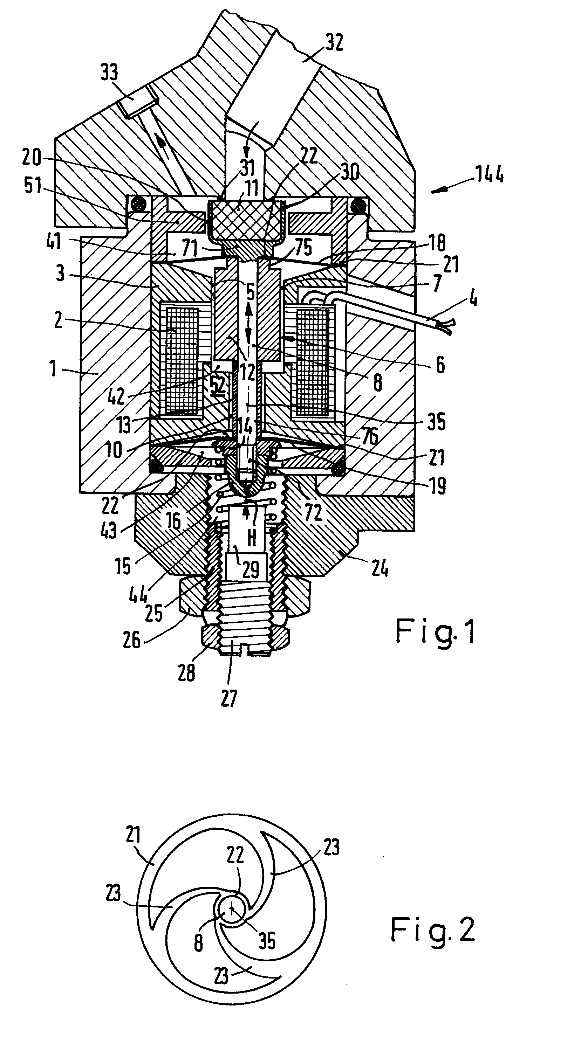

In einer Mittelbohrung 5 des Spulenkörpers 3 ist ein als Ganzes mit 6 bezeichneter Anker berührungslos, nämlich unter Spiel 7 von beispielsweise etwa 0,3 mm geführt. Zwischen dem Topf 30 und dem Joch 51 besteht ein Spiel 20, ebenso besteht zwischen der Büchse 13 und dem Distanzstück 52 Spiel 10. Die Ankerstange 8 trägt an dem in Fig. 1 oberen Ende 71 einen aus elastischem Werkstoff, z.B. Hartgummi bestehenden Ventil-Schliesskörper 11, der in dem Topf 30 untergebracht ist.

Im mittleren Abschnitt enthält der Anker 6 einen aus magnetisierbarem Werkstoff, z.B. einer Eisenlegierung bestehenden, verbreiterten Zylinder 12, darunter eine Büchse 13 und unten einen Stützteller 14 für eine Spiralfeder 15. Der Teller 14 ist mit einer Verschlussschraube 16 auf die Ankerstange 8 aufgeschraubt.

Unmittelbar unterhalb des Ventil-Schliesskörpers 11 greifen eine Blattfeder 18 und oberhalb des Federtellers 14 eine weitere Blattfeder 19 an. Beide Blattfedern 18, 19 sind gemäss Fig. 2 mit einem äusseren Haltering 21, einem inneren Haltering 22 und beispielsweise drei sichelförmigen Verbindungsstegen 23 versehen.

In einem unteren Gehäuseteil 24 ist eine Gewindehülse 25 eingeschraubt, auf die sich das untere Ende der Feder 15 abstützt. Die Hülse 25 ist mittels einer Mutter 26 gegen den Gehäuseteil 24 verspannt. Feder 15 hält den Anker 7 und damit den Ventil-Schliesskörper 11 in der in Fig. 1 gezeichneten Schliessstellung. Durch Verstellen der Hülse 25 lässt sich die Vorspannung der Feder 15 und damit die Schliesskraft des Ventil-Schliesskörpers 11 einstellen.

In die Gewindehülse 25 ist eine Schraube 27 eingeschraubt, die oben einen Anschlagkörper 29 trägt, der beispielsweise aus Hartgummi besteht. Gegen diesen schlägt die Mutter 16 auf, wenn der Anker 6 abwärtsbewegt wird. Durch Verstellen der Schraube 27 lässt sich der Anschlag 29 und damit der Hub H des Ankers 6 einstellen.

Wenn die spule 2 unter Strom gesetzt wird, wird der Anker 6 und damit der Schliesskörper 11 abwärts bewegt, so dass Spiel zwischen dem Schliesskörper 11 und dem Ventilsitz 31 entsteht. Nunmehr kann Luft durch den Kanal 32 ein- und durch den Kanal 33 wieder ausströmen.

Die berührungslose, abnutzungsfreie Führung des Zylinders 12 im Spulenkörper 2 lässt sich durch die Anwendung von Blattfedern 18,19 als Halterung für den Anker 6 erzielen. Die berührungslose Führung erfordert jedoch, dass sich der Anker immer exakt in der in Fig. 1 strichpunktiert eingezeichneten Mittelachse 35 bewegt. Dies wiederum wird dadurch ermöglicht, dass die obere Blattfeder 18 unmittelbar unterhalb des Ventilschliesskörpers 11 angreift. Die Hubbegrenzung für den Anker 6 erfolgt durch die am unteren Ende des Ankers angeordneten Teile 16,29.

Bei bisherigen Magnetventilen werden dagegen die Hubbegrenzungsteile unterhalb des Ventil-Schliesskörpers 11 angeordnet bzw. der Schliesskörper 11 wird selbst zum Hubbegrenzungselement gemacht. Dann aber kann die obere Blattfeder nicht unmittelbar unterhalb des Schliesskörpers 11 angreifen. Es entsteht ein relativ langer, ungeführter Oberteil des Ankers, wodurch dieser nicht genügend exakt in der Achse 35 verbleibt und daher auch die berührungslose Führung des Ankers 6 problematisch wird bzw. nicht anwendbar ist.

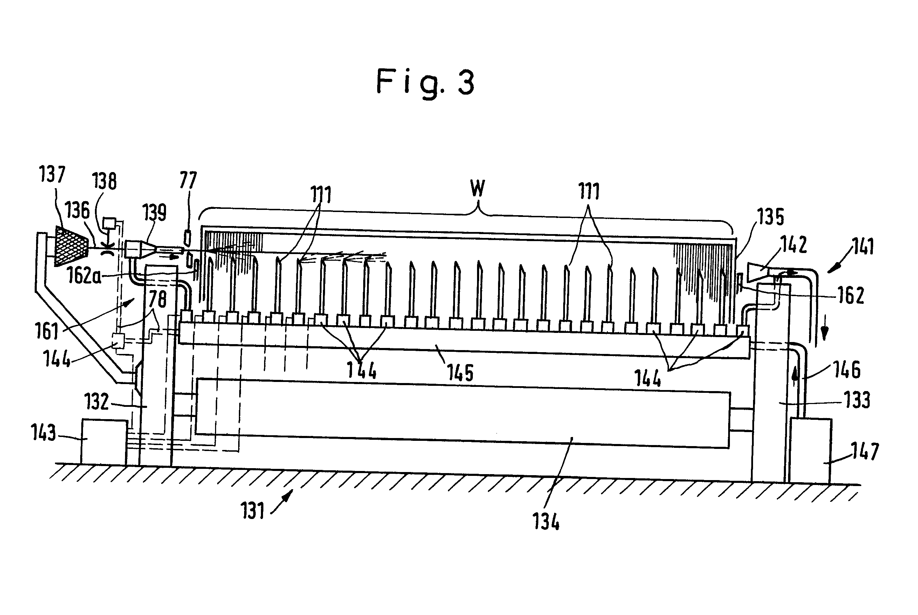

Die als Ganzes mit 131 bezeichnete Webmaschine nach Fig. 3 enthält zwei Maschinenwangen 132,133. Dazwischen sind ein Warenbaum 134 und ein Riet 135 angeordnet. Der Schussfaden 136 wird von einer ortsfesten Spule 137 abgezogen, durch eine Schussfadenbremse 138 geleitet und von einer ausserhalb des Webfaches (Webbreite W) befindlichen Haupteintragsdüse 139 eingeblasen. Ueber die Webbreite W verteilt sind Hilfsdüsen 111 angeordnet, die während des Schusseintrages in das Webfach hineinragen. Auf der Fangseite 141 ist eine Saugdüse 142 angeordnet.

Die Düsen 139,111,142 sind über z.B. von einer elektronischen Steuereinrichtung 143 gesteuerte Magnetventile 144 entsprechend Fig. 1 an ein Luftverteilrohr 145 angeschlossen, das über eine Luftzuführungsleitung 146 von einem Druckluftbehälter (Luftquelle) 147 gespeist ist. Der Behälter 147 wird von einem nicht dargestellten Luftkompressor unter Druck gehalten.

Auf der Schussseite 161 und der Fangseite 141 ist je eine in Fig. 3 nach oben gerichtete Blasdüse 162a,162 angeordnet. Die Düsen 139,162a,111,162 sind sämtlich über Magnetventile 144 gemäss Fig. 1 gespeist bzw. gesteuert. Je nach Webbreite W und Drehzahl der Webmaschine 131 wird beispielsweise 600 - 800 Mal ein Schussfaden 136 eingetragen, wobei jedesmal insbesondere die Düsen 139, 111 sukzessive hintereinander Luft erhalten (Wanderfeld). Dabei wird jedesmal der Anker 6 einmal hin und her bewegt. Es liegt also eine besonders hohe Schaltzahl der Magnetventile vor. Die berührungslose Führung des Ankers 6 unter Spiel 7 sowie die exakte halterung in der Achse 35 ist daher besonders wichtig.Durch diese Anordnung wird überdies besonders wenig Wärme innerhalb der Teile erzeugt. Die Funktion ist dadurch besonders sicher.

Während des Betriebes besteht in den Ventilräumen 41 - 44 ständig ein im wesentlichen unter konstantem Druck stehendes Luftkissen.

Die Blattfedern 18,19 können auch mehr als drei Stege 23 besitzen. Auch können sie als durchgehende Platte nach Art einer Membran ausgebildet sein. Bei einer weiteren Bauart ist z.B. auch die Schussfadenbremse 138 über ein Magnetventil 144 entsprechend Fig. 1 und eine in Fig. 3 gestrichelt angedeutete Druckluftleitung 78 gesteuert.

- 7 -

Patentansprüche

1. Magnetventil, insbesondere für die Speisung von Elementen, z.B. Düsen einer Luftwebmaschine (131), mit einem eine elektrische Spule (2) enthaltenden Spulenkörper (3) und einem darin hin und her beweglichen Anker (6), an dessen einem Ende (71) ein mit einem Ventilsitz (31) zusammenarbeitender Ventil-Schliesskörper (11) angebracht ist, dadurch g e k e n n z e i c h n e t , dass an dem dem Ventilschliesskörper (11) abgekehrten Anker-Ende (72) ein den Ankerhub (H) begrenzender Anschlag (29) angeordnet ist und dass der Anker (6) durch radial zwischen ihm und dem Spulenkörper (3) wirkende Federelemente (18,19) berührungslos im Spulenkörper (3) gehalten ist, wovon eines (18) unmittelbar beim Ventil-Schliesskörper (11) angreift.

2. Magnetventil nach Anspruch 1, dadurch gekennzeichnet, dass der Hubbegrenzungsanschlag (29) einstellbar (25,26) angeordnet ist.

3. Magnetventil nach den Ansprüchen 1 und 2, dadurch gekennzeichnet, dass der Hubbegrenzungsanschlag ein aus elastischem Werkstoff, z.B. Hartgummi, bestehender Zapfen (29) ist.

4. Magnetventil nach einem der Ansprüche 1 - 3, dadurch gekennzeichnet, dass die Federelemente für die Halterung des Ankers (6) aus Blattfedern (18,19) gebildet sind.

5. Magnetventil nach Anspruch 4, dadurch gekennzeichnet, dass jede Blattfeder (18,19) einen äusseren (21) und einen inneren Haltering (22) aufweist, welche Halteringe (21,22) durch mehrere, sichelförmige Stege (23) miteinander verbunden sind.

6. Magnetventil nach einem der vorhergehenden Ansprüche, dadurch gekennzeichnet, dass der Anker (6) einen verbreiterten, aus magnetisierbarem Werkstoff bestehenden, mittleren Zylinder (12) von etwa der Länge des Spulenkörpers (3) geführt ist und der zwischen zwei Federelementen (18,19) angeordnet ist, wobei diese an beidseits des Zylinders (12) befindlichen, stangenförmigen Abschnitten (75,76) des Ankers (6) angreift.

Fig.1

Fig.2

0184601

1/2

# Fig. 3

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-1 218 616  (BONNET) <br> * Insgesamt * | 1 | F 16 K   31/06 <br> H 01 F    7/16 |
| A | | 2 | |
| | --- | | |
| Y | PATENTS ABSTRACTS OF JAPAN, Band 5, Nr. 167 (E-79)[839], 24. Oktober 1981; & JP - A - 56 94 706 (MATSUSHITA DENKI SANGYO K.K.) 31.07.1981 | 1 | |
| A | IDEM | 4 | |
| | --- | | |
| A | US-A-2 690 529  (LINDBLAD) <br> * Insgesamt * | 1,4,5 | |
| | --- | | **RECHERCHIERTE SACHGEBIETE (Int. Cl.4)** |
| A | US-A-2 435 817  (BOYNTON) <br> * Insgesamt * | 1,4,5 | |
| | --- | | F 16 K <br> H 01 F |
| A | US-A-2 858 487  (IMMEL) <br> * Insgesamt * | 1,4 | |
| | ----- | | |

Der vorliegende Recherchenbericht wurde für alle Patentansprüche erstellt.

| Recherchenort <br> DEN HAAG | Abschlußdatum der Recherche <br> 12-08-1985 | Prüfer <br> VERELST P.E.J. |
|---|---|---|